# EUROPEAN PATENT APPLICATION

(11) **EP 1 010 919 A1**
(43) Date of publication of application: **21.06.2000**
(21) Application number: 99125098.6
(22) Date of filing: 16.12.1999
(51) Int. Cl.: F16G 1/28, F16H 7/02

(54) **A method of belt transmission, a transmission belt used in the method and an apparatus for belt transmission**

(30) Priority: 17.12.1998 JP 35863198; 20.08.1999 JP 23411499
(71) Applicant: Kabushiki Kaisha Yushin Seiki, Kyoto-shi, Kyoto-fu, 612 8492 (JP)
(72) Inventor: Arai, Hiroyuki, c/o K. K. Yushin Seiki, Kyoto-shi, Kyoto-fu, 612-8492 (JP)
(74) Representative: Pellmann, Hans-Bernd, Dipl.-Ing.

(57) **Abstract**

A method of belt transmission wherein a rotational force of a toothed belt (2) to be engaged in a toothed pulley (4) on a driving side is transmitted to a driven portion, the method being characterized in that the belt (2) is covered with a tension-bearing belt (1) having a high tensile strength to make ready to transmit a frictional force in order that the tension is transmitted to the driven portion through the belt, thereby increasing torque and preventing a problem that a tooth of the toothed belt is out of mesh with the toothed pulley.

## Description

### BACKGROUND OF THE INVENTION

### FIELD OF THE INVENTION

The present invention relates to a method of transmission of a driving force using a timing belt or the like, a transmission belt for carrying out the method and an apparatus for belt transmission.

### DISCLOSURE OF THE PRIOR ART

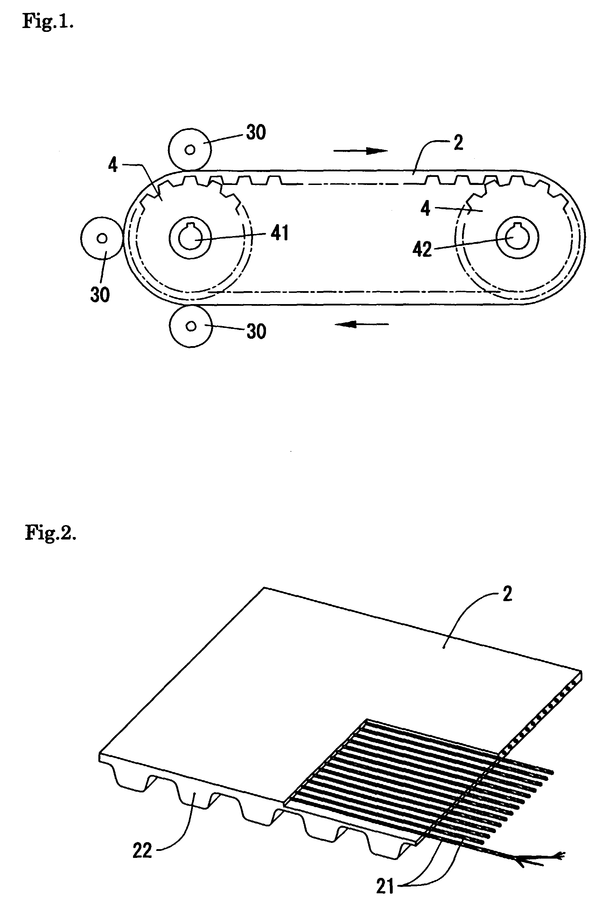

Conventionally a timing belt has been used for noiseless transmission of a driving force without sliding of a belt. In transmission by the timing belt, for example, as shown in FIG.1 a toothed pulley 4 is mounted around a driving shaft 41 and around a driven shaft 42, respectively, and a toothed belt 2 extends in a loop and is engaged in the toothed pulleys 4,4.

In the foregoing embodiment, as the toothed pulley 4 around the driving shaft 41 is turned, its rotational force is transmitted to the toothed pulley 4 around the driven shaft 42 via the toothed belt 2. Generally, the toothed belt 2 is made of a resilient material having a specific hardness such as a synthetic resin. Thus, the embodiment has an advantage that the toothed belt 2 is noiselessly engaged in the toothed pulley 4. In addition, the driving force is transmitted by the engagement of teeth of the toothed belt 2 in the toothed pulley 4, so that the belt 2 does not slide unlike a common flat belt. This gives a further advantage that the angle of rotation or the distance of movement on the driving side can be precisely transmitted to the driven side.

However, conventional timing belts can not transmit a great torque from the driving shaft 41 to the driven shaft 42. The toothed belt 2 is made of a resilient material as described above and is stretched due to the tension of the toothed belt 2 travelling between the toothed pulleys 4, 4. The stretched belt 2 lowers the torque to be transmitted accordingly.

To increase a torque to be transmitted, it is possible to use a toothed belt 2 which has, as the core, a plurality of twisted threads 21 as shown in FIG.2. The twisted threads 21 may be a steel cord or an aramid fiber cord. The twisted threads 21 bear the tension, and make the belt 2 more resistant to tension than the belt 2 free of the twisted threads 21, leading to an increased torque. However, even if the toothed belt 2 contains such twisted threads 21, the twisted threads 21 themselves are apt to stretch. In transmission of a great torque, the belt 2 may turn around the pulley 4 with a tooth 22 of the belt 2 out of mesh with the pulley 4 (hereinafter referred to as "tooth-out-of-mesh phenomenon"). To alleviate or prevent such phenomenon, two or more rollers 30 may be disposed at a specific spacing from each other on the surface of a portion of the belt 2 wound around the pulley 4 to press the belt 2 against the pulley 4, but with a low effect. Even the arrangement of the rollers 30 is effective only in transmission of a maximum torque of about 7.5 kgf·m (in the case of a timing belt 25 mm in width and about 5 m in overall length and a pulley 60 mm in diameter).

### SUMMARY OF THE INVENTION

It is an object of the present invention to increase a torque by preventing a problem that a tooth of the belt 2 is out of mesh with the pulley 4 (hereinafter referred to as "the tooth-out-of-mesh problem") in transmitting to a driven portion a rotational force of the toothed belt to be engaged in the toothed pulley on the driving shaft.

Another object of the invention is to provide a transmission belt capable of easily achieving the foregoing object.

A further object of the invention is to provide an apparatus for belt transmission capable of easily carrying out the method of increasing a torque without posing the tooth-out-of-mesh problem in transmitting to a driven portion a rotational force of the toothed belt to be engaged in the toothed pulley on the driving shaft.

To achieve these objects, the present invention provides a method of belt transmission wherein a rotational force of a toothed belt 2 to be engaged in a toothed pulley 4 on a driving side is transmitted to a driven portion, the method being characterized in that the belt 2 is covered with a tension-bearing belt 1 having a high tensile strength to make ready to transmit a frictional force in order that the tension is transmitted to the driven portion through the belt 1. The foregoing method includes an embodiment wherein the two belts put together by adhesion make ready to transmit a force (wherein sliding is not induced).

According to the above-mentioned embodiment of the present invention, the toothed belt 2 is engaged in the toothed pulley 4 in the same manner as in the prior art. The tension-bearing belt 1 is combined with the toothed belt 2 to make ready to transmit a force by a frictional force. The belt 1 made of a tension-resistant material assures that a rotational force of the toothed pulley 4 on the driving side is converted to the tension of the belt 1 via a frictional force between the belts 1 and 2. Since the belt 1 is scarcely stretched, a high conversion of the rotational force to the tension is attained.

On the other hand, the tension-bearing belt 1 covers the surface of the belt 2 wound around the toothed pulley 4 and has a high resistance to tension. Consequently just before the belt 2 turns around the pulley 4 with a tooth 22 probably out of mesh with the pulley 4, the belt 1 presses the entire area of gear engagement to prevent the tooth-out-of-mesh problem.

The present invention is as described above and can achieve the following remarkable results.

A rotational force of the toothed pulley 4 on the driving side is efficiently converted to the tension of the tension-bearing belt 1. Further, the tension-bearing belt 1 is scarcely stretched due to the tension. These factors increase the efficiency of transmitting tension to the driven portion compared with conventional apparatus and absorb the stretching of the belt, making it unnecessary to finely adjust a space between the pulleys as done heretofore. Since the tooth-out-of-mesh problem scarcely occurs between the belt 2 and the pulley 4, a gap rarely arises between the rotation angle of the pulley 4 and the corresponding rotation angle or a moving distance on the driven portion.

To achieve the second object of the present invention, the present invention provides a transmission belt comprising a toothed belt 2 to be engaged in a toothed pulley 4, and a tension-bearing belt 1 having a high tensile strength covering the surface of the belt 2 to make ready to transmit a frictional force.

In this embodiment, the transmission belt extends between the toothed pulleys 4, 4 on the driving side and on the driven side, thereby realizing the same aspect as the first object of the invention and producing the same results. Further, this aspect of the invention can be easily realized.

When a driven portion making a rectilinear movement is a driven side, the belt 1 is connected to the driven portion.

To achieve the third object of the present invention, the present invention provides an apparatus for belt transmission which transmits a force between the toothed pulleys 4, 4 on the driving side and on the driven side via the toothed belt 2 to be engaged therein. In the apparatus, an idle roller(s) 3 is disposed between the pair of pulleys 4, 4 to contact with the surface of the belt 2 with a controllable contact strength. The belt 1 is provided in contact with the surface of the belt 2 to be engaged in the pulleys 4, 4 to make ready to transmit a frictional force. The idle roller 3 is arranged on an inner side of a travelling portion of the belt 1.

The term "to make ready to transmit a frictional force" used herein refers to a state wherein a frictional force generated by pressing the belt 1 against the surface of the belt 2 is caused to act on between the belts 1 and 2 and the torque or tension is partly transmitted between the belts 1 and 2.

In this embodiment, the belt 2 is engaged in the pulley 4 in the same manner as in the conventional techniques. The idle roller 3 is installed so as to contact with a travelling portion of the belt 2 extending between the pulleys 4, 4 so that the belt 2 is inwardly bent at this location. The idle roller 3 is disposed on the bent portion of the belt 2 inside a travelling portion of the belt 1. This means that the belt 1 is not in contact with the idle roller 3 at the location. The belts 1 and 2 are superposed on each other to make ready to transmit a force by a frictional force. Since the belt 1 is made of a tension-resistant material, a rotational force of the pulley 4 on the driving side is assuredly converted to the tension of the belt 1 through the frictional force between the belts 1 and 2. In this case, the belt 1 is scarcely stretched, and therefore a high conversion from the rotational force to the tension is attained.

The belt 1 is in contact with the surface of the belt 2 to be engaged in the pulley 4, thereby pressing the belt 2. In addition, the belt 1 is highly resistant to tension. These factors prevent the tooth-out-of-mesh phenomenon.

If the belt 2 is stretched, the tension of the belt 2 is adjusted to a proper level by relocating the idle roller 3.

A rotational force of the pulley 4 on the driving side is efficiently converted to the tension of the belt 1 and the belt 1 is scarcely stretched by the tension. These features increase an efficiency of transmitting the tension to the driven side, compared with the prior art and the stretching of the belt 1 is absorbed, eliminating a need for finely adjusting a space between the pulleys as conventionally done.

Since a tooth 22 of the belt 2 scarcely comes out of mesh with the pulley 4, a gap rarely arises between the rotation amount of the pulley 4 and the corresponding amount of operation on the driven side.

Even if the belt 2 is stretched, the tension can be properly maintained at a suitable level by adjusting the tension with the idle roller 3.

Other objects, features, aspects and advantages of the invention will become more apparent from the following detailed description of embodiments with reference to the accompanying drawings.

### BRIEF DESCRIPTION OF THE DRAWINGS

FIG.1 is a view showing an embodiment of the prior art.
FIG.2 is a view showing an improvement in the prior art embodiment.
FIG.3 is a view showing an embodiment of Example 1 illustrating the present invention.
FIG.4 is a fragmentary view showing the embodiment of FIG.3 in section.
FIG.5 is a perspective view showing the tension-bearing belt 1 used in Example 2.
FIG.6 is a view showing the belt 1 integrally bonded to the belt 2 in Example 2.
FIG.7 is a view showing another embodiment of the tension-bearing belt 1.
FIG.8 is a view showing another embodiment of the toothed belt 2.
FIG.9 is a view showing another embodiment of the transmission belt according to the present invention.
FIG.10 is a view showing a further embodiment of the transmission belt according to the present invention.
FIG.11 is a plan view showing the embodiment of Example 3 in its entirety.
FIG.12 is a side view showing the embodiment of FIG.11.
FIG.13 is a fragmentary view showing the belt transmission by the embodiments of FIGS. 11 and 12.
FIG.14 is a view showing an embodiment corresponding to the embodiment of FIG.13 wherein a connecting member 13 is disposed on the belt 1.
FIG.15 is a view showing another embodiment of the space-adjusting mechanism 5.
FIG.16 is a view showing an embodiment of the space-adjusting mechanism 5 which can be manually operated.
FIG.17 is a view showing another embodiment of transmission mechanism with swing arms.

### DETAILED DESCRIPTION OF THE EMBODIMENT

The present invention is described in more detail with reference to the embodiments shown in the accompanying drawings.

### Example 1

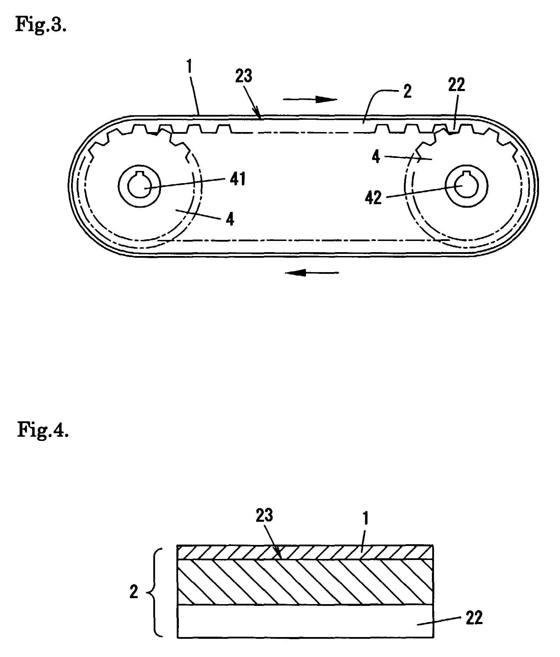

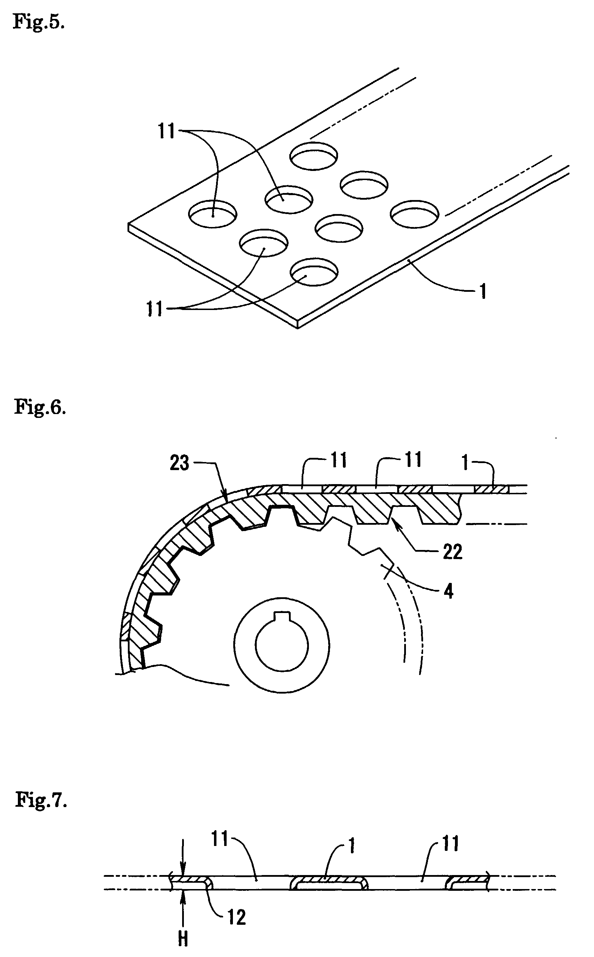

The embodiments shown in FIGS. 3 and 4 transmit a torque from a driving shaft 41 to a driven shaft 42. In the embodiments, the transmission belt extends as wound around a toothed pulley 4 on a driving shaft 41 and around a toothed pulley 4 on a driven shaft 42.

The above-mentioned transmission belt, as shown in FIG.3, consists of a toothed belt 2 and a tension-bearing belt 1 both extending in a loop, the belt 1 being superposed on a flat surface 23 opposed to the side of teeth 22 on the belt 2. While the belts 1 and 2 are not fixed to each other in this embodiment, the belt 1 is so arranged as to cover the surface of the belt 2 extending between a pair of pulleys 4,4.

The belt 2 is the so-called timing belt of the common type 4.5 mm in overall thickness and 25 mm in width. On the other hand, the belt 2 is made of steel (marageing steel) and has the same width as the belt 1 and a thickness of 0.15 to 0.25 mm.

The steel belt has a loop length predetermined based on the diameter of pitch circle of the toothed pulley 4, the thickness of the belt 2 and other factors. The steel belt is set to a tension resistance of 375-625 kgf (15-25 kgf/mm per width unit).

When the foregoing transmission belt was used, an increased torque was transmitted from the driving shaft 41 on the driving side to the driven shaft 42 on the driven side. On operation beyond the limited torque, sliding was brought about between the belts 1 and 2. Yet, this embodiment did not entail the tooth-out-of-mesh phenomenon which would be caused by conventional embodiments devoid of a tension-burdening belt 1. Even when the belt 1 slid in this embodiment, the embodiment transmitted a torque far greater than the torque (maximum torque 7.5 kgf·m) involved in the case of tooth-out-of-mesh phenomenon. The embodiment of Example 1 transmitted a torque twice greater than conventional embodiments having only a toothed belt 2.

In this embodiment, the belt 1 is arranged on the flat surface 23 of the belt 2 in a frictionally contacted state as illustrated in FIG.4. The extent of frictional contact can be increased by perforating the belt 1 to give a plurality of through-holes 11 as depicted in FIGS.5 and 6. Optionally the belt 1 may be continuously perforated lengthwise. The peripheral portions of through-holes 11 become engaged in the flat surface 23, thereby enhancing the extent of frictional contact.

The through-holes 11 may be burring holes as shown in FIG.7. In this case, preferably the burring holes have a projection 12 with a height H as high as the thickness of the belt 1 (about 0.15 to about 0.25 mm).

The belt 1 may be integrally bonded by adhesion to the flat surface 23 of the belt 2 as shown in FIG.6.

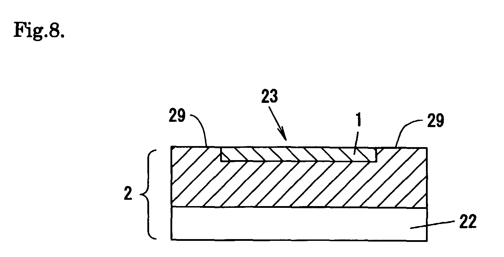

The embodiment may have rib 29 integrally formed on the belt 2 and extending lengthwise thereof on longitudinal ends of the flat surface 23 as seen in a sectional view of the belt 2 in FIG.8. In this case, the belt 2 having rib 29 may be formed in a sectional shape as shown in FIG.8. The belt 1 is superposed on the belt 2 to snugly fit between the two rib 29, 29. When such transmission belt is used, the belt 1 travels as held between the rib 29, 29 without coming out of engagement with the belt 2. Consequently this structure assures the stability of torque and operation.

### Example 2

According to the embodiment of Example 1, the torque was transmitted from the driving shaft 41 with the pulley 4 to the driven shaft 42 with the pulley 4. Another embodiment is described in Example 2 wherein a specifically angular reciprocating rotation is transmitted. For example, a toothed belt 2 having a specific length is wound around a pulley 4 while a tension-bearing belt 1 is superposed on the surface of the belt 2 and is fixed at its ends to a forced-transmitted member which is reciprocatingly moved in a rectilinear direction.

According to this embodiment, the driving shaft 41 is reciprocatingly rotated at a specific angle, whereby the rotational force is transmitted via the toothed pulley 4 to the belt 1 and the driven portion with both ends of the tension-bearing belt 1 attached thereto is moved in a rectilinear direction.

### Other Embodiments

In the above embodiments, the tension-bearing belt 1 was made of steel. However, other materials can be used for the belt 1. For example, useful belts include a strip of sheet formed of carbon fibers or aramid fibers. The belt 1 preferably has a tension resistance of about 15 to about 25 kgf/mm per width unit. In this case, the belt is usable for a torque usually transmitted in the range of 11.2 to 18.7 kgf·m (in the case of a pulley 60 mm in diameter). The value of torque transmitted by this embodiment is 1.5 to 2.5 times the torque transmitted by conventional timing belts. The belt used under said conditions has a sufficient durability.

To assure a precise angular transmission, a great torque (2.2 to 2.5 times the torque conventionally set) should be set. In this case, the transmission belt is required to have a tension resistance in the approximate range of 22-25 kgf/mm per width unit.

The toothed belt 2 used in the foregoing embodiments may be of the type having core threads.

The teeth on the pulley 4 and the teeth 22 on the belt 2 may be in the form selected, of course, from a wide range of forms conventionally adopted, and may be, for example, in the form of circular arc.

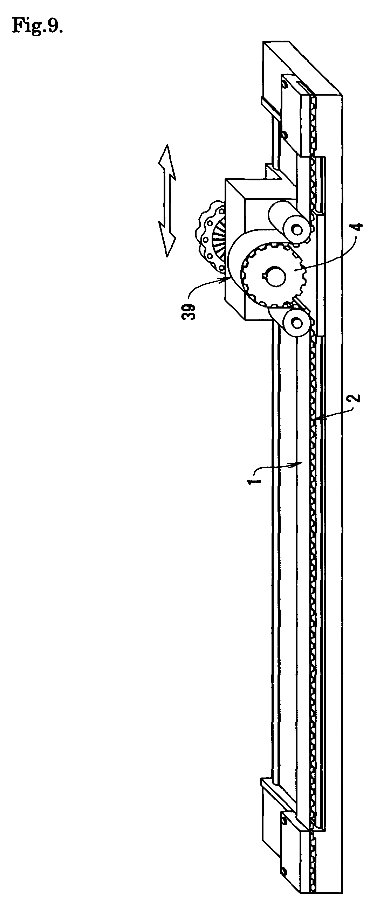

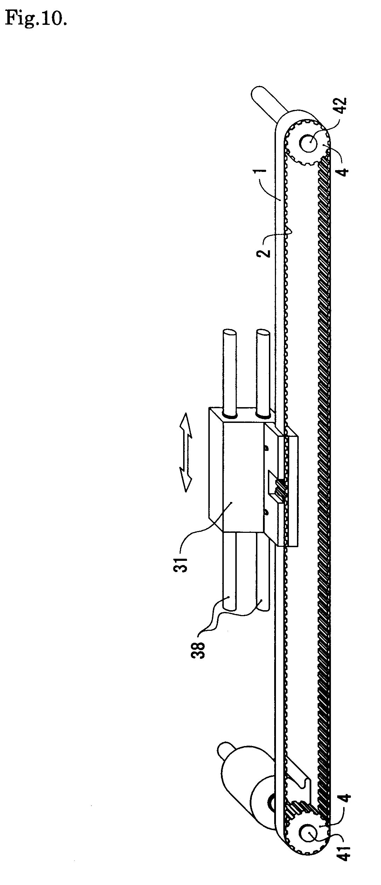

A further embodiment is employable wherein a combination of belts 1 and 2 is wound around a toothed pulley 4 arranged in a self-travelling type driving member 39 as shown in FIG.9. Further embodiments include a belt transmission method wherein as shown in FIG.10, a toothed belt 2 and a tension-bearing belt 1 are connected at both ends to a driven member 31 disposed on a pair of guide shafts 38 and wherein the belts are wound around a toothed pulley 4 on a driving shaft 41 and around a toothed pulley 4 on a driven shaft 42.

### Example 3

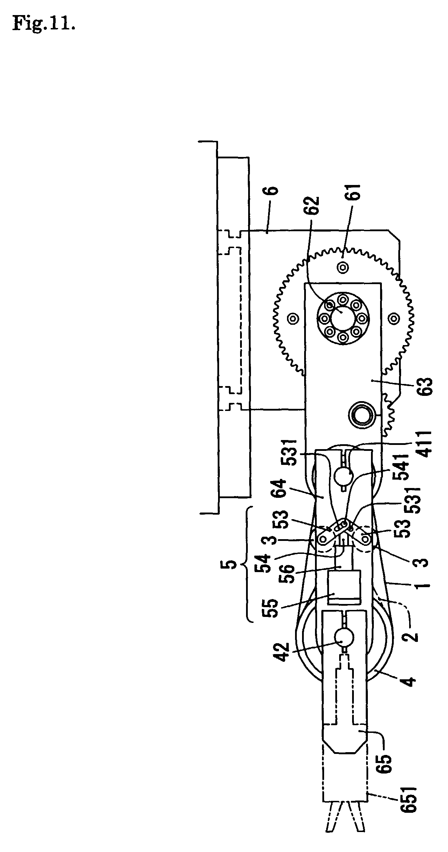

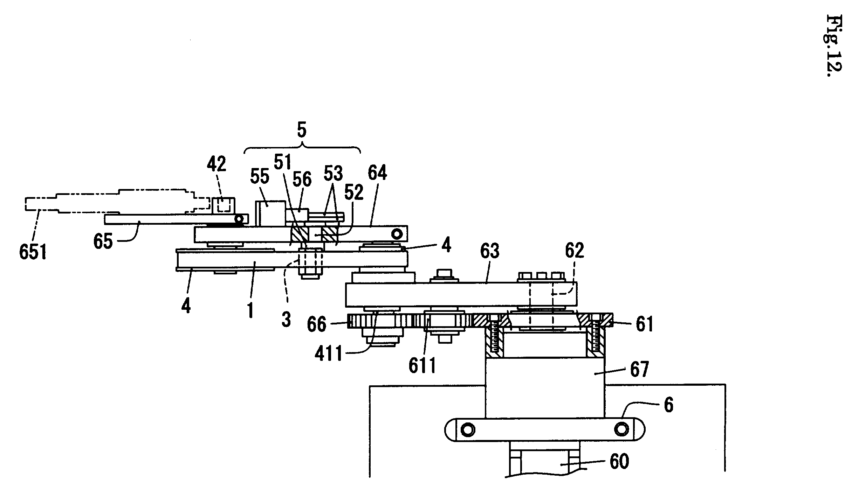

A belt transmission apparatus of Example 3 can be used for a swing arms of a robot capable of withdrawing a molded product from an injection molding machine as shown in FIGS. 11 and 12.

The illustrated swing arm system comprises a frame 6, a sun gear 61 fixed to the frame 6, a driving shaft 62 rotatably passing through the sun gear 61, a first arm 63 connected to the driving shaft 62, a second arm 64 rotatably connected to the forward end of the first arm 63, a driven shaft 42 rotatably supported at the forward end of the second arm 64, a clamping pawl 651 connected to the driven shaft 42 for holding a molded product of a resin and a third arm 65 having the clamping pawl 651.

The first arm 63 has, at its forward end, a planet gear 66 in mesh, via a mediate gear 611, with the sun gear 61. An intermediate shaft 411 with the planet gear 66 mounted thereon extends through the first arm 63 and is secured to the second arm 64 which is rotatable integrally with the intermediate shaft 411. A toothed pulley 4 is mutually rotatably mounted around the intermediate shaft 411 externally thereof and is fixed to the first arm 63. Accordingly, the shaft on the driving side is fixedly mounted.

The toothed pulley 4 on the driven side is disposed at a lower end of the driven shaft 42 provided at the forward end of the second arm 64 so that the belt transmission is carried out between the toothed pulley 4 on the driven side and the toothed pulley 4 fixedly mounted on the driving side.

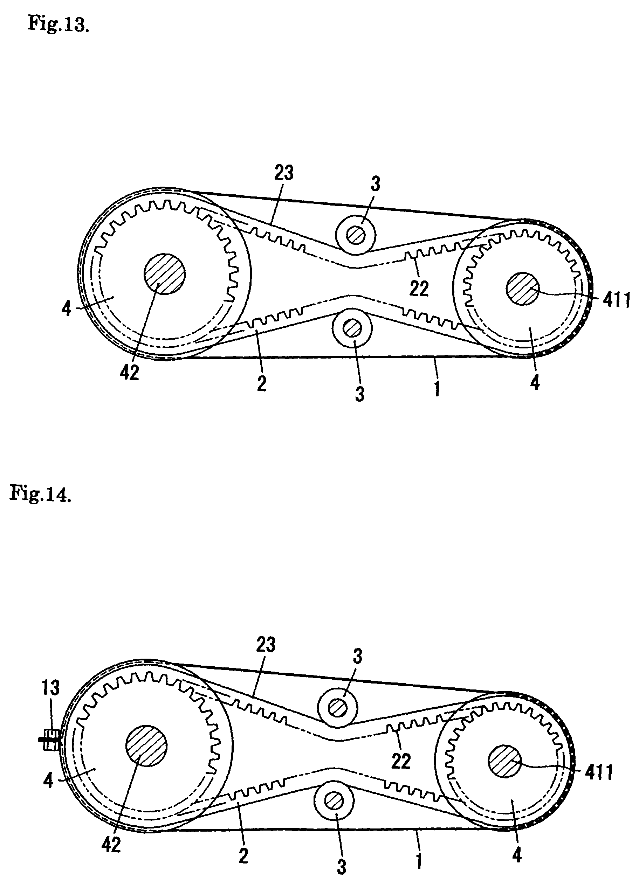

For transmission between the fixed pulley 4 and the toothed pulley 4 around the driven shaft 42, a tension-bearing belt 1 extends in a loop over a flat surface 43 opposite to the teeth 22 of a toothed belt 2 as shown in FIG.13. In this embodiment, while the belts 1 and 2 are not bonded together, the belt 1 is in contact with the surface of the belt 2 in mesh with the pair of pulleys 4,4.

The belt 2 of this embodiment is the so-called timing belt of the common type 4.5 mm in overall thickness and 25 mm in width. On the other hand, the belt 1 is made of steel (marageing steel) and has the same width as the belt 2 and a thickness of 0.15 to 0.25 mm.

The steel belt has a loop length predetermined based on the diameter of pitch circle of the pulley 4, the thickness of the belt 2 and other factors. The steel belt is set to a tension resistance of 375-625 kgf (15-25 kgf/mm per width unit).

A pair of idle rollers 3 is provided between the pulleys 4,4 to bend a travelling portion of the belt 2. In this embodiment, a space between the idle rollers 3,3 is adjusted by a space-adjusting mechanism 5 mounted on the second arm 64.

The space-adjusting mechanism 5 comprises a crank 51 rotatably holding the idle roller 3, a crank shaft 52 rotatably held by the second arm 64, a lever 53 extending from an upper end of the crank shaft 52, a projectable or retractable shaft 54 capable of reciprocatingly driving the forward end of the lever 53 lengthwise of the second arm 64, a servomotor 55 capable of driving the projectable or retractable shaft 54 in the forward or backward direction, and a feed screw mechanism 56 capable of converting the rotational force of the servomotor 55 to rectilinear motion.

The forward ends of levers 53, 53 interlocking with the crank 51 having idle rollers 3 connected thereto are symmetrically crossed at an upper portion of the second arm 64. A pin 541 provided at the forward end of the shaft 54 is fitted in an oblong aperture 531 formed at the crossing location. Consequently when the shaft 54 projects or retracts depending on the action of the servomotor 55, the pairs of levers 53 turn accordingly so that the crank 51 turns according to the angle of rotation. Then the idle rollers 3,3 disposed at an eccentric position relative to the crank shaft 52 are made to come nearer or away from each other, whereby a space between the idle rollers 3,3 can be adjusted.

The take-out robot of this embodiment has such structure that a reduction gear 67 is mechanically associated with the main servomotor 60 for oscillating the arm of said structure. Consequently the first arm 63 is oscillated according to reciprocating rotation of the main servomotor 60, and the intermediate shaft 411 is rotated due to the action of the planet gear 66. The second arm 64 is oscillated according to the rotation angle of the shaft 411. The third arm 65 mounted on the driven shaft 42 is oscillated according to the rotation angle of the driven shaft 42 depending on a transmission ratio due to the transmission between the toothed pulley 4 fixed to the forward end of the first arm 63 and the toothed pulley 4 around the driven shaft 42. In this way, the third arm 65 is interlocked with the first arm 63 and the second arm 64 according to the reciprocating rotation of the main servomotor 60, whereby the oscillation at the predetermined angle is caused.

The foregoing embodiment transmits a markedly increased torque, compared with the torque conventionally involved, between the toothed pulley 4 around the intermediate shaft 411 and the toothed pulley 4 around the driven shaft 42. In transmission for a greater torque than the limited torque, sliding occurred between the toothed belt 2 and the tension-burdening belt 1, but there did not occur the tooth-out-of-mesh phenomenon which would be caused by conventional embodiments devoid of a tension-burdening belt 1. Further, the embodiment of Example 3 transmits a far greater torque even in the case of sliding between the two belts than the torque (a maximum torque of 7.5 kgf·m) conventionally transmitted in the case of the tooth-out-of-mesh phenomenon. Especially the limited torque was increased since the tension of toothed belt 2 was enhanced by the use of a pair of idle rollers 3,3.

According to this embodiment, the tension-bearing belt 1 is arranged on the flat surface 23 of the belt 2 in a frictionally contacted state as illustrated in FIG.13. The extent of frictional contact can be increased as described above by perforating the belt 1 to give a plurality of through-holes 11 as depicted in FIGS.5 and 6. Optionally the belt 1 may be continuously perforated lengthwise. In this case, the peripheral portions of through-holes 11 become engaged in the flat surface 23, thereby enhancing the extent of frictional contact.

The through-holes 11 may be burring holes as shown in FIG.7. In this case, preferably the burring holes have a projection 12 with a height H as high as the thickness (approximately 0.15-0.25 mm) of the belt 1.

An increased tension can be imparted to a travelling portion of the belt 2 by adjusting a space between the idle rollers 3,3. The belt 2 may be stretched although the belt 1 is not stretched. In this case, the tension of the belt 2 can be maintained at the predetermined level by space adjustment according to the extent of stretching.

### Other Embodiments

In the foregoing embodiments, a torque is transmitted from the toothed pulley 4 fixed to the support of the intermediate shaft 411 to the toothed pulley 4 around the driven shaft 42 using the toothed belt 2 and the tension-burdening belt 1 extending in a closed loop. However, the embodiments are not limited to the above structure, and other embodiments are possible. For example, when a specifically angular reciprocating rotation is transmitted, a structure may be useful wherein a toothed belt 2 and a tension-burdening belt 1 in a strip form extend in an open loop, both ends thereof being fixed by screwing or otherwise to a toothed pulley 4 of the partly lacked type on the driven side. Optionally, as shown in FIG.14, only a tension-burdening belt 1 is provided in the form of a strip and both ends of the belt 1 are connected together by screwing or caulking with a connecting member 13.

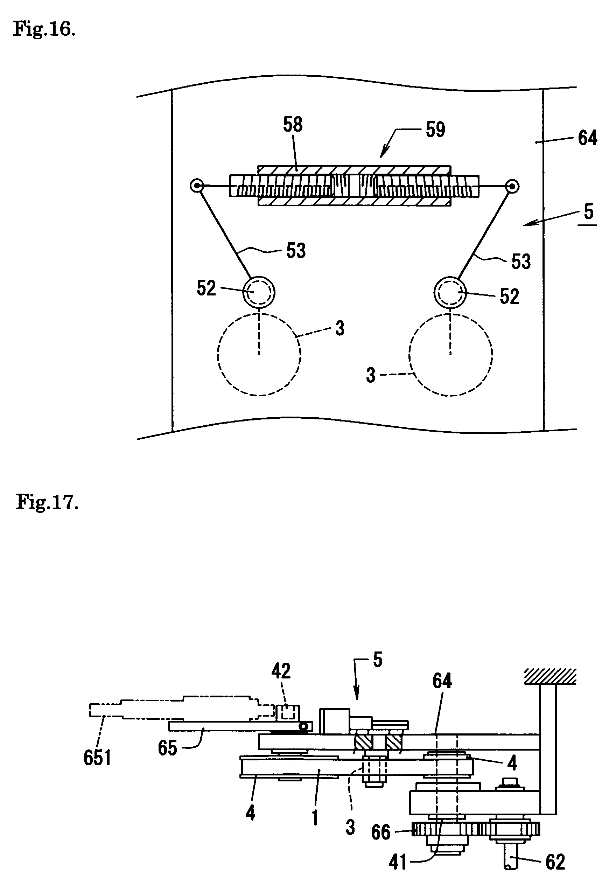

When a second arm 64 is secured and a third arm 65 fixed to the forward end thereof is oscillated as shown n FIG.17, the driving shaft 41 mechanically associated with the driving shaft 62 is rotatably supported by the second arm 64, and a toothed pulley 4 is mounted on the driving shaft 41 on the driving side so that transmission is done between the pulley 4 on the driving side and the pulley 4 around the driven shaft 42. Thereby the third arm 65 on the driven side is oscillated according to the rotation of the driving shaft 62.

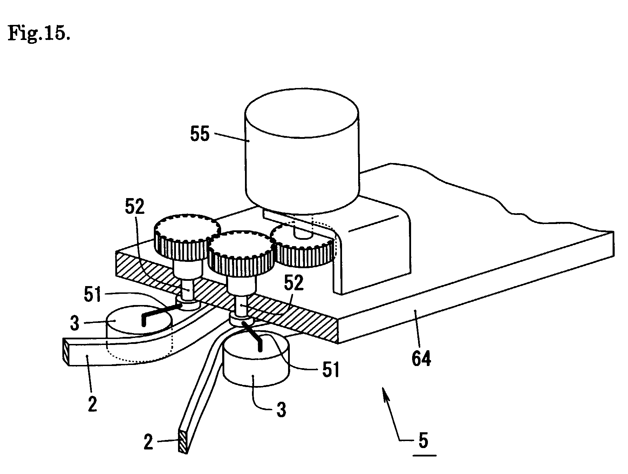

Furthermore, in the transmission mechanism between the crank 51 and the servomotor 55 in the space-adjusting mechanism 5, a crankshaft 52 is symmetrically rotated by gear mechanism as shown in FIG.15. This gear may be mechanically associated via a gear with the servomotor 55. A space between the forward ends of the levers 53, 53 extending from the crank shaft 52 may be adjusted by a turnbuckle mechanism 59 as shown in FIG.16. In this case, the space can be adjusted by the turn of a nut tube 58 in the turnbuckle mechanism 59.

In the above embodiment, the tension-bearing belt 1 was made of steel. However, other materials can be used for the belt 1. For example, useful belts include a strip of sheet made of carbon fibers or aramid fibers. For this purpose, the belt 1 preferably has a tension resistance of about 15 to about 25 kgf/mm per width unit. In this case, the belt is usable for a torque usually transmitted in the range of 11.2 to 18.7 kgf·m (in the case of a pulley 60 mm in diameter). The torque value in this embodiment is 1.5 to 2.5 times the torque transmitted by conventional timing belts. The belt thus set has a sufficient durability. Further, the external surface of the tension-bearing belt 1 may be coated with the material used for the belt 2.

To assure a precise angular transmission, a great torque (2.2 to 2.5 times the torque conventionally set) should be set. In this case, the belt is set to a tension resistance in the approximate range of 22-25 kgf/mm per width unit.

The toothed belt 2 used in the foregoing embodiment may be of the type having core threads.

The teeth of the pulley 4 and the teeth 22 of the belt 2 may be in the form selected, of course, from a wide range of tooth forms conven-tionally used including, for example, a circular arc.

A method of belt transmission wherein a rotational force of a toothed belt to be engaged in a toothed pulley on a driving side is transmitted to a driven portion, the method being characterized in that the belt is covered with a tension-bearing belt having a high tensile strength to make ready to transmit a frictional force in order that the tension is transmitted to the driven portion through the belt, thereby increasing torque and preventing a problem that a tooth of the toothed belt is out of mesh with the toothed pulley.

## Claims

1. A method of belt transmission wherein a rotational force of a toothed belt 2 to be engaged in a toothed pulley 4 on a driving side is transmitted to a driven portion, the method being characterized in that the belt 2 is covered with a tension-bearing belt 1 having a high tensile strength to make ready to transmit a frictional force in order that the tension is transmitted to the driven portion through the belt 1.

2. The method according to claim 1, wherein the driven portion is the toothed pulley 4 on the driven side and wherein the belt 1 covers the surface of the belt 2 to be engaged in the pulley 4 on the driven side to make ready to transmit a frictional force.

3. The method according to claim 1 or 2, wherein the tension-bearing belt 1 is a steel belt having a tension resistance of about 15 to about 25 kgf/mm per width unit.

4. A transmission belt consisting of a toothed belt 2 to be engaged in a toothed pulley 4 and a tension-bearing belt 1 covering the surface of the belt 2 to make ready to transmit a frictional force.

5. The transmission belt according to claim 4, wherein the toothed belt 2 extends in a loop between the toothed pulley 4 on the driving side and the toothed pulley 4 on the driven side and wherein the tension-bearing belt 1 extends in a loop to cover the surface of the belt 2 extending in a loop.

6. The transmission belt according to claim 4, wherein a reciprocating movement of specific distance is transmitted and wherein the toothed belt 2 is provided only at a portion of the transmission belt which is engaged in the pulley 4.

7. The transmission belt according to claim 4 or 5, wherein the tension-bearing belt 1 is a steel belt having a tension resistance of about 15 to about 25 kgf/mm per width unit.

8. The transmission belt according to claim 7, wherein the tension-bearing belt 1 is a steel belt having a thickness of about 0.15 to about 0.25 mm.

9. The transmission belt according to claim 4, 5, 6, 7 or 8, wherein the tension-bearing belt 1 has a plurality of through-holes continuously formed with a predetermined pitch.

10. The transmission belt according to claim 9, wherein the through-holes are burring holes projected into the side of the belt 2.

11. The transmission belt according to claim 4, 5, 6, 7, 8, 9 or 10, wherein the tension-bearing belt 1 is a strip having a specific width narrower than the toothed belt 2 and wherein the belt 2 has rib 29 on its surface along longitudinal ends of the belt 1.

12. The transmission belt according to claim 4, 5, 6, 7, 8, 9, 10 or 11, wherein the surface of the tension-bearing belt 1 is covered with a coating layer integrally formed with the belt 2.

13. An apparatus for belt transmission which transmits a force between toothed pulleys 4, 4 on a driving side and on a driven side by a toothed belt 2 to be engaged in the pulleys 4, 4, the apparatus being characterized in that an idle roller or rollers 3 are disposed between the pair of pulleys 4, 4 to contact with the surface of the belt 2 with a controllable contact strength, that a tension-bearing belt 1 is provided in contact with the surface of the belt 2 to be engaged in the pulleys 4, 4 to make ready to transmit a frictional force, and that the idle roller 3 is arranged on an inner side of a travelling portion of the belt 1 extending between the pulleys 4,4.

14. The apparatus according to claim 13, wherein the toothed belt 2 is fixed at one end thereof to one of the pulleys 4, 4 in an engaged state and wherein the belt 1 is secured to one end of the belt 2 to be engaged in one of the pulleys 4, 4 in contact therewith.

15. The apparatus according to claim 13 or 14, wherein the tension-bearing belt 1 is a steel belt having a tension resistance of about 15 to about 25 kgf/mm per width unit.

16. The apparatus according to claim 13, 14 or 15, wherein idle rollers 3,3 are disposed between a travelling portion of the belt 1 and a travelling portion of the belt 2, respectively and wherein the strength of contact between the belts 1 and 2 can be adjusted by causing the idle rollers to come nearer or away from each other.

17. The apparatus according to claim 13, 14, 15 or 16, wherein the apparatus comprises an swing arm mounted on a reciprocatingly rotatable driving shaft and capable of swinging according to the rotation of the driving shaft, and an swing arm 65 rotatably supported on the forward end of said arm on the driven side and wherein the pulley 4 on the driving side is fixed to a supporting member on the driving shaft and the pulley 4 on the driven side is mounted on the rotatable shaft of the swing arm on the driven side.
